# DEMANDE DE BREVET EUROPEEN

(11) **EP 4 776 135 A1**
(43) Date de publication de la demande: **15.07.2026**
(21) Numéro de dépôt: 26151704.9
(22) Date de dépôt: 14.01.2026
(51) Int. Cl.: G06F 9/50, G06F 9/48, G06F 9/455

(54) **DISPOSITIF ÉLECTRONIQUE AVIONIQUE EMBARQUÉ À BORD D'UN AÉRONEF AVEC PARTITION DE GESTION POUR TÉLÉCHARGEMENT DE FONCTION(S) NON-CRITIQUE(S) ET/OU CRITIQUE(S), AÉRONEF ET FLOTTE D AÉRONEFS ASSOCIÉS**

(30) Priorité: 14.01.2025 FR 2500379
(71) Demandeur: THALES, 92190 Meudon (FR)
(72) Inventeur: MAURICE, Jérémy, 31600 SEYSSES (FR)
(74) Mandataire: Lavoix

(57) **Abrégé**

**La présente** invention concerne un dispositif avionique (4) comprenant au moins des ressources matérielles (20) stockant un hyperviseur (34) configuré pour :
- générer au moins une partition logicielle critique (44) associée à au moins une partie des ressources (20) et configurée pour exécuter une fonction logicielle critique,
- générer au moins une partition logicielle non-critique (46) associée à au moins une partie des ressources (20) et configurée pour exécuter une fonction logicielle non-critique,
- exécuter, sur une durée prédéfinie, les partitions (44, 46) en leur allouant l'au moins une partie des ressources (20) associées,
- générer et exécuter une partition logicielle de gestion (48) configurée pour :
o recevoir au moins une fonction logicielle et la stocker dans les ressources (20),
o remplacer la fonction des partitions (44, 46) par une fonction stockée, et
∘ ordonner à l'hyperviseur (34) d'exécuter, sur la durée prédéfinie, les partitions (44, 46)

## Description

La présente invention concerne un dispositif électronique avionique destiné à être embarqué à bord d'un aéronef.

L'invention concerne également un aéronef embarquant un tel dispositif de traitement.

L'invention concerne également une flotte de tels aéronefs.

Les dispositifs électroniques embarqués dans les aéronefs jouent un rôle central dans la gestion des fonctions vitales desdits aéronefs. Par exemple, de telles fonctions gèrent le contrôle de vol, la navigation, la gestion des systèmes embarqués et la communication. Ces fonctions peuvent être divisées en deux grandes catégories : les fonctions critiques, qui sont essentielles pour la sécurité de l'aéronef et de ses occupants, et les fonctions non-critiques, qui apportent des services supplémentaires, mais n'influent pas directement sur la sécurité ou le fonctionnement essentiel de l'aéronef.

Les dispositifs avioniques traditionnels sont souvent segmentés, ou compartimentés, les fonctions critiques et non-critiques fonctionnant sur des architectures distinctes afin de minimiser les risques d'interférence et d'assurer une séparation stricte entre ces deux types de fonctions.

Cependant, une telle segmentation augmente la complexité, le coût, et le poids des aéronefs.

De plus, une telle segmentation impose au pilote d'être à l'interface entre le monde des fonctions critiques et le monde des fonctions non-critiques, augmentant ainsi le risque d'erreurs humaines.

Par ailleurs, une telle segmentation ne propose pas différents modes de déploiement, tels que mono-équipement dans un aéronef, multi-équipement dans un aéronef, mono-équipement multi-aéronef ou multi-équipement multi-aéronef.

Elle ne propose pas non plus de déploiement bord/sol pour gérer des flottes aéronefs.

Le but de l'invention est alors de proposer un dispositif électronique avionique destiné à être embarqué à bord d'un aéronef et permettant de répondre aux problématiques ci-dessus.

A cet effet, la présente invention a pour objet un dispositif électronique avionique destiné à être embarqué à bord d'un aéronef, ledit dispositif avionique comprenant au moins
- une unité de communication configurée pour échanger des données avec un équipement électronique,
- des ressources matérielles comprenant :
   ∘ des ressources de calcul,
   ∘ des ressources réseau,
   ∘ des ressources de stockage de données comprenant au moins un premier espace mémoire dans lequel est stocké un hyperviseur

Suivant d'autres aspects avantageux de l'invention, le dispositif avionique comprend une ou plusieurs des caractéristiques suivantes prise(s) isolément ou suivant toutes les combinaisons possibles :
- la partition logicielle de gestion est en outre configurée pour supprimer l'au moins une partition logicielle non-critique et/ou l'au moins une partition logicielle critique associée(s) à la fonction non-critique et/ou à la fonction critique qui a été remplacée,
- la partition logicielle de gestion est en outre configurée pour modifier l'ordonnancement temporel en fonction d'au moins un critère de priorité associé à l'au moins une partition logicielle critique et/ou à l'au moins une partition non-critique,
- l'au moins un critère de priorité est un critère de temps d'exécution, de priorité fixable par un opérateur ou de possibilité d'exécution en plusieurs cycles d'exécution,
- la partition logicielle de gestion est en outre configurée pour déterminer au moins un paramètre d'exécution représentatif d'une qualité d'exécution de la fonction non-critique de l'au moins une partition logicielle non-critique et/ou de la fonction critique de l'au moins une partition logicielle critique, l'au moins un paramètre d'exécution étant également un critère de priorité,
- l'hyperviseur est configuré pour générer au moins deux partitions logicielles critiques ou non-critiques,
- la partition logicielle de gestion est en outre configurée pour autoriser des échanges de données entre les au moins deux partitions logicielles critiques ou non-critiques selon au moins un critère d'échange,
- l'au moins un critère d'échange est un critère de disponibilité, un critère d'intégrité et/ou un critère de confidentialité entre les au moins deux partitions logicielles non-critiques,
- l'ordonnancement temporel est adapté pour garantir l'exécution de l'au moins une partition logicielle critique et de l'au moins une partition logicielle de gestion (48) sur la durée prédéfinie,
- les ressources de calcul comportent en outre des ressources de calcul critiques et des ressources de calcul non-critiques préalablement fixées, l'au moins une partition logicielle critique et la partition logicielle de gestion étant associées aux ressources de calcul critiques, l'au moins une partition logicielle non-critique étant associée aux ressources de calcul non-critiques,
- les ressources de calcul critiques comportent en outre des ressources de calcul de gestion et des ressources de calcul avioniques préalablement fixées, la partition logicielle de gestion étant associée aux ressources de calcul de gestion et l'au moins une partition logicielle critique étant associée aux ressources de calcul avioniques,
- une passerelle de communication entre l'au moins une partition logicielle critique et l'au moins une partition logicielle non-critique, ladite passerelle de communication étant configurée pour :
   - autoriser un échange de données entre l'au moins une partition logicielle critique et l'au moins une partition logicielle non-critique selon l'au moins un critère d'échange,
   - vérifier l'intégrité et/ou la confidentialité dudit échange de données, et
   - interrompre l'échange de données si l'intégrité et/ou la confidentialité associée n'est pas vérifiée,
   - la passerelle de communication étant de préférence incluse dans l'hyperviseur ou externe au dispositif avionique,
la fonction non-critique destinée à être exécutée par l'au moins une partition logicielle non-critique est incluse dans un conteneur comportant au moins une fonction annexe, la fonction non-critique nécessitant l'au moins une fonction annexe pour être exécutée.

La présente invention a pour objet un aéronef comprenant un dispositif avionique tel que défini ci-dessus.

La présente invention a pour objet une flotte d'aéronefs configurés pour échanger des données de traitement ou un service logiciel, au moins un aéronef de ladite flotte comportant un dispositif avionique tel que défini ci-dessus ;
tous les aéronefs de ladite flotte comportant de préférence ledit dispositif avionique.

L'invention apparaitra plus clairement à la lecture de la description qui va suivre, donnée uniquement à titre d'exemple non limitatif et faite en référence aux dessins dans lesquels :
- [Fig.1] la figure 1 est une représentation schématique d'un dispositif électronique avionique destiné à être embarqué à bord d'un aéronef et communiquant avec un dispositif électronique externe ;
- [Fig.2] la figure 2 est une représentation schématique d'une architecture logicielle générée par le dispositif avionique ;
- [Fig.3] la figure 3 est une représentation schématique d'un mode de réalisation du dispositif avionique ;
- [Fig.4] la figure 4 est une représentation schématique d'un deuxième mode de réalisation du dispositif avionique ;
- [Fig.5] la figure 5 est une représentation schématique d'un aéronef comportant une pluralité de dispositifs avioniques selon l'invention ; et
- [Fig.6] la figure 6 est une représentation schématique d'une flotte d'aéronefs, chacun étant équipé d'un dispositif avionique selon l'invention.

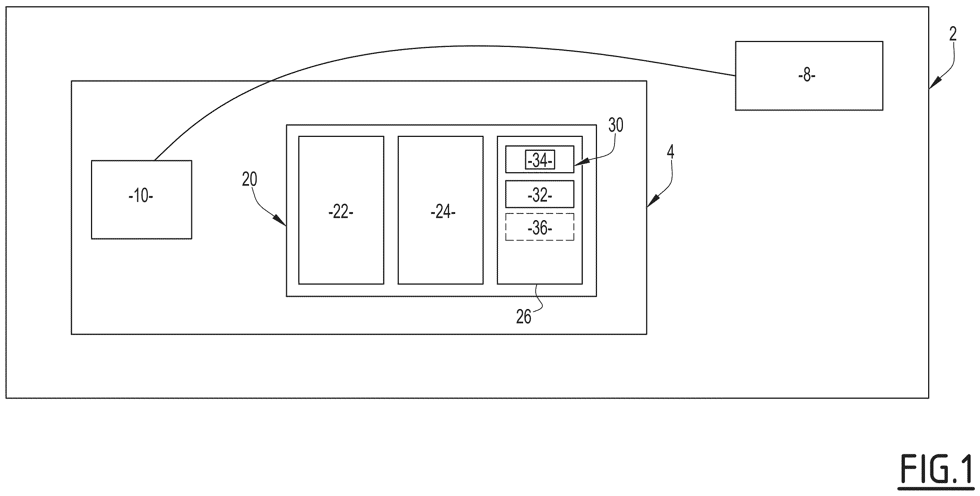

Sur la figure 1, un aéronef 2 comporte un dispositif électronique avionique 4 communiquant avec un équipement électronique 8.

Typiquement, l'équipement électronique 8 est un serveur interne ou externe à l'aéronef 2.

Le dispositif avionique 4 comporte au moins une unité de communication 10 et des ressources matérielles 20.

L'unité de communication 10 est configurée pour communiquer avec l'équipement électronique 8 et échanger des données avec ledit équipement électronique 8.

L'unité de communication 10 est également configurée pour transférer, aux ressources matérielles 20, les données reçues lors d'un tel échange de données.

Les ressources matérielles 20 comportent au moins des ressources de calcul 22, des ressources réseau 24 et des ressources de stockage de données 26.

Typiquement, les ressources de calcul 22 comportent au moins une unité centrale de traitement graphique ou GPU (de l'anglais *Graphics Processing Unit*) et/ou une unité centrale de traitement de tenseur ou TPU (de l'anglais *Tensor Processing Unit*) et/ou une unité centrale de traitement de données ou DPU (de l'anglais *Data Processing Unit*) et/ou une unité centrale de traitement neuronal ou NPU (de l'anglais *Neural Processing Unit*) et/ou une unité centrale de traitement ou CPU (de l'anglais *Central Processing Unit*), par exemple un ou plusieurs processeurs.

Chaque processeur est par exemple un processeur mono-cœur, ou encore un processeur multi-cœur.

De préférence, les ressources de calcul 22 comportent au moins un CPU.

Typiquement, les ressources réseau 24 comportent une ou plusieurs cartes réseau

Typiquement, les ressources de stockage de données 26 comportent des supports magnétiques tels que des disques durs, des supports à état solide tels que des disques HDD (Hard Disk Drives) et/ou SSD (Solid State Drive), des supports amovibles tels que des clés USB et des cartes SD et/ou des disques optiques tels que des CD et DVD.

Par exemple, les ressources de stockage de données 26 sont des ressources de mémoire vive, ou RAM (de l'anglais *Random Access Memory*)*.*

La RAM est un type de mémoire volatile utilisé dans les systèmes informatiques pour stocker temporairement des données et des instructions nécessaires au processeur pendant l'exécution des programmes. La RAM est composée de circuits intégrés capables de lire et d'écrire des données rapidement, mais elle perd son contenu lorsque l'alimentation électrique est coupée.

En complément facultatif, les ressources de stockage de données 26 sont des ressources de mémoire flash.

La mémoire flash est un type de mémoire non-volatile et conserve donc les données même sans alimentation électrique, en se basant typiquement sur une technologie à semiconducteurs qui utilise des cellules de mémoire à grille flottante.

Les ressources de stockage de données 26 comportent au moins un premier espace mémoire 30 et un deuxième espace mémoire 32, ledit deuxième espace mémoire 32 étant distinct du premier espace mémoire 30.

Le premier espace de mémoire 30 est configuré pour stocker un hyperviseur 34 (de l'anglais *hypervisor*)*.*

L'hyperviseur 34 est un logiciel adapté pour générer et exécuter des partitions logicielles.

Dans la suite de la description, une partition logicielle désigne un ensemble constitué d'allocation(s) de ressources matérielles et d'une fonction logicielle associée, la ou les allocation(s) temporaire(s) de ressources matérielles étant préférentiellement temporaire(s).

L'hyperviseur 34 permet à plusieurs partitions logicielles de fonctionner simultanément à partir des mêmes ressources matérielles en répartissant, à un instant donné, les ressources matérielles entre lesdites partitions logicielles, chaque ressource matérielle étant allouée à une seule partition logicielle respective en un instant temporel donné.

Par exemple, les partitions logicielles générées et exécutées par l'hyperviseur 34 sont certifiées par la norme ARINC 653.

L'ARINC 653 est une norme développée par Aeronautical Radio, Incorporated (ARINC), principalement utilisée dans le domaine de l'avionique et des systèmes embarqués critiques pour la sécurité, tels que les systèmes d'avionique modulaire intégrée (IMA, de l'anglais *Integrated Modular Avionics*)*.* Cette norme vise à garantir que plusieurs applications ayant différents niveaux de criticité puissent fonctionner sur une même plateforme matérielle, en respectant des contraintes de sécurité strictes.

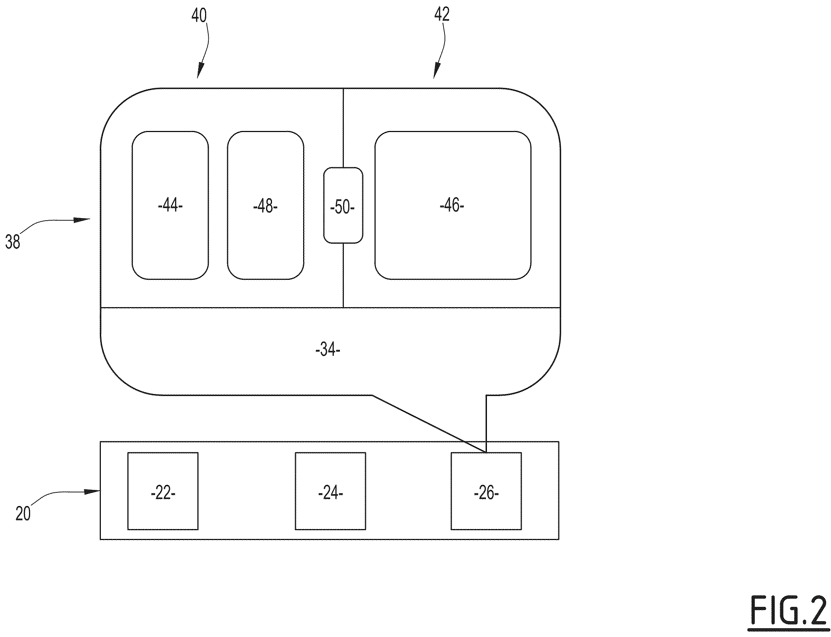

Comme représenté sur la figure 2, l'hyperviseur 34 est configuré pour générer une architecture logicielle 38 compartimentée en un domaine avionique 40 et un domaine ouvert 42.

Le domaine avionique 40 est un domaine correspondant à un niveau de sécurité le plus élevé à bord de l'aéronef 2, en particulier le niveau de sécurité requis le plus élevé de dispositif avionique 4 de l'aéronef 2.

Le domaine ouvert 42 est un domaine auquel correspond un niveau de sécurité moins élevé que le niveau de sécurité du domaine avionique 40.

L'hyperviseur 34 est configuré pour générer au moins une partition logicielle critique 44, l'au moins une partition logicielle critique 44 étant une partition logicielle dont la fonction logicielle associée est classifiée comme critique par un opérateur.

Une fonction logicielle critique est une fonction dont le dysfonctionnement présente un risque pour la sûreté et/ou pour la sécurité de l'aéronef 2.

Typiquement, l'au moins une partition logicielle critique 44 appartient au domaine avionique 40.

Une fonction logicielle critique est hébergée au sein d'un système d'exploitation dans les ressources de stockage de données 26.

Typiquement, les fonctions logicielles critiques sont des fonctions héritées ne faisant pas intervenir de conteneur dans leur hébergement au sein du système d'exploitation.

L'au moins une partition logicielle critique 44 est configurée pour exécuter la fonction logicielle critique en utilisant au moins une partie des ressources matérielles 20 associée.

Par exemple, la fonction logicielle critique est une fonction de communication avec le contrôle de la circulation aérienne (ATC, de l'anglais *Air Traffic Control*), ou une fonction de calcul d'une trajectoire à suivre pour l'aéronef 2, ou encore une fonction de contrôle d'actionneurs embarqués à bord de l'aéronef 2.

En complément facultatif, l'au moins une partition logicielle critique 44 est certifiée selon un niveau DAL (de l'anglais *Design Assurance Level*), typiquement DAL A, DAL B ou DAL C selon la norme DO-178.

La norme DO-178 est une norme internationale développée par RTCA (de l'anglais *Radio Technical Commission for Aeronautics*) pour guider le développement et la certification des logiciels embarqués dans l'aviation civile.

La norme DO-178 définit cinq niveaux de certification, ordonnés ci-après par niveau de criticité décroissant : DAL A, DAL B, DAL C, DAL D et DAL E, le niveau DAL A étant le niveau de criticité le plus élevé, et le niveau DAL E étant le niveau de criticité le moins élevé.

Un niveau de certification DAL A correspond à un matériel dont une défaillance pourrait entraîner la perte de l'avion ou de vies humaines.

Un niveau de certification DAL B correspond à un matériel dont une défaillance pourrait compromettre gravement la sécurité du vol ou provoquer des blessures graves.

Un niveau de certification DAL C correspond à un matériel dont une défaillance pourrait causer une dégradation significative des performances de l'avion, mais sans risque immédiat pour la sécurité.

Un niveau de certification DAL D correspond à un matériel dont une défaillance n'affecterait que légèrement les performances de l'avion.

Un niveau de certification DAL E correspond à un matériel dont une défaillance n'aurait pas de conséquence pour la sécurité ou les performances de l'avion.

L'hyperviseur 34 est configuré pour générer au moins une partition logicielle non-critique 46 en utilisant au moins une partie des ressources matérielles 20 associée.

L'au moins une partition logicielle non-critique 46 est une partition logicielle dont la fonction logicielle associée est classifiée comme non-critique par l'opérateur.

Une fonction logicielle non-critique est une fonction dont le dysfonctionnement ne présente pas de risque pour la sécurité de l'aéronef 2.

Typiquement, l'au moins une partition logicielle non-critique 46 appartient au domaine ouvert 42.

Une fonction logicielle non-critique est également hébergée au sein d'un système d'exploitation dans les ressources de stockage de données 26.

Typiquement, la fonction associée à l'au moins une partition logicielle non-critique 46 est incluse dans un conteneur comportant au moins une fonction annexe, la fonction non-critique nécessitant l'au moins une fonction annexe pour être exécutée.

On parle alors de fonctions « cloud natives » et l'au moins une fonction annexe permet l'implémentation d'une architecture de micro-services au sein même du conteneur.

Typiquement, le conteneur contient également un orchestrateur configuré pour gérer et automatiser le déploiement, la mise à l'échelle, la surveillance et la gestion du conteneur.

Par exemple, l'orchestrateur est un orchestrateur Kubernetes.

Kubernetes est un orchestrateur open-source largement déployé et existant sous plusieurs versions telles que : K8S, K3S, Rancher Kubernetes Engine, Openshift ou AKS.

Typiquement, la fonction logicielle non-critique est une fonction de distribution de contenus multimédias à des passagers à bord de l'aéronef 2, ou une fonction de gestion de voyants lumineux à destination desdits passagers, ou encore une fonction de distribution de connexion internet pour lesdits passagers.

Typiquement, une fonction logicielle non-critique est de type « Best-Effort », c'est-à-dire fonctionnant sur un principe où elle tente de fournir un service de la meilleure manière possible, sans garantie de performance, de qualité de service ou de livraison des données.

Pour ce type de fonction non-critique, il n'y a pas d'engagement formel à fournir un certain niveau de fiabilité, de latence ou de bande passante. Les ressources matérielles 20 sont utilisées de manière opportuniste : les données sont envoyées dans l'espoir qu'elles arrivent à destination, mais aucune garantie n'est donnée en cas de congestion du réseau, de perte de paquets ou d'autres problèmes.

En complément facultatif, l'au moins une partition logicielle non-critique 46 est certifiée DAL D ou DAL E selon la norme DO-178.

Typiquement, l'opérateur prédéfinit plusieurs tailles de partitions logicielles non-critiques 46 parmi : XS (de l'anglais *extra small*)*,* S (de l'anglais *small*)*,* M (de l'anglais *medium*)*,* L (de l'anglais *large*) ou XL (de l'anglais *extra large*)*.*

Une taille de partition logicielle correspond à une quantité de ressources matérielles 20 allouée à ladite partition logicielle.

Ainsi, définir de telles tailles de partitions logicielles non-critiques 46 permet de remplacer des fonctions logicielles non-critique sans redémarrer entièrement le dispositif avionique 4 (et donc les partitions logicielles critiques).

Par ailleurs, l'hyperviseur 34 est configuré pour exécuter, sur une durée prédéfinie, l'au moins une partition logicielle critique 44 et l'au moins une partition logicielle non-critique 46 en allouant à chacune des partitions l'au moins une partie des ressources matérielles 20 associée et selon un ordonnancement temporel prédéterminé.

Typiquement, la durée prédéfinie est comprise entre 1 milliseconde et 10 secondes.

La durée prédéfinie est fixée par l'opérateur en fonction du contexte d'utilisation du dispositif avionique 4.

L'ordonnancement temporel correspond à un plan d'exécution des différentes partitions les unes après les autres sur la durée prédéfinie.

En variante, l'ordonnancement temporel est adapté pour garantir l'exécution de l'au moins une partition logicielle critique 44 et de l'au moins une partition logicielle de gestion 48 sur la durée prédéfinie.

Il est alors nécessaire de caractériser le temps d'exécution nécessaire pour exécuter l'au moins une partition logicielle critique 44 afin de garantir que la durée prédéfinie soit suffisante.

L'hyperviseur 34 est configuré pour générer et exécuter une partition logicielle de gestion 48 utilisant au moins une partie des ressources matérielles 20 associée.

Typiquement, l'hyperviseur 34 est adapté pour exécuter ladite partition logicielle de gestion 48 entre deux exécutions de l'ordonnancement temporel.

La partition logicielle de gestion 48 est configurée pour recevoir au moins une fonction critique ou non-critique depuis l'équipement électronique 8.

Par exemple, l'au moins une fonction critique ou non-critique reçue est incluse dans les données reçues par l'unité de communication 10.

L'unité de communication 10 est adaptée pour transmettre l'au moins une fonction critique ou non-critique à la partition logicielle de gestion 48.

La partition logicielle de gestion 48 est configurée pour stocker l'au moins une fonction critique ou non-critique dans le deuxième espace mémoire 32.

Le deuxième espace mémoire 32 comporte au moins une fonction non-critique stockée dans un catalogue de fonctions accessibles par la partition logicielle de gestion.

Le nombre de fonction(s) logicielle(s) critique(s) ou non-critique(s) stockée(s) n'est alors limité que par la capacité de stockage dudit deuxième espace mémoire 32.

Ainsi, l'au moins une partie des ressources matérielle 20 associée à la partition logicielle de gestion 48 comporte au moins le deuxième espace mémoire 32.

La partition logicielle de gestion 48 est configurée pour remplacer la fonction non-critique de l'au moins une partition logicielle non-critique 46 par une fonction non-critique stockée dans la deuxième zone mémoire 32.

La partition logicielle de gestion 48 est également configurée pour remplacer la fonction critique de l'au moins une partition logicielle critique 44 par une fonction critique stockée dans la deuxième zone mémoire 32.

En complément facultatif, la partition logicielle de gestion 48 est également configurée pour supprimer l'au moins une partition logicielle non-critique 46 et/ou l'au moins une partition logicielle critique 44 associée(s) à la fonction non-critique et/ou à la fonction critique qui a été remplacée.

En variante, les ressources de stockage de données 26 comportent un troisième espace mémoire 36, distinct du premier espace mémoire 30 et du deuxième espace mémoire 32.

Le troisième espace mémoire 36 comporte alors des fonctions critiques ou non-critiques supprimées et/ou des systèmes d'exploitation non supportés ou non validés.

Ainsi, le troisième espace mémoire 36 n'est associé avec aucun de l'au moins une partition logicielle critique 44 ou de l'au moins une partition logicielle non-critique 46.

La partition logicielle de gestion 48 est configurée pour ordonner à l'hyperviseur 34 d'exécuter, sur la durée prédéfinie, l'au moins une partition logicielle critique 44 et l'au moins une partition logicielle non-critique 46.

En complément facultatif, la partition logicielle de gestion 48 est configurée pour modifier l'ordonnancement temporel en fonction d'au moins un critère de priorité associé à l'au moins une partition logicielle non-critique 46 et/ou à l'au moins une partition logicielle critique 44

Par exemple, l'au moins un critère de priorité est un critère de temps d'exécution, de priorité fixable par l'opérateur ou de possibilité d'exécution en plusieurs cycles d'exécution.

Typiquement, le temps d'exécution de l'au moins une partition logicielle non-critique 46 est prédéfini par l'opérateur, et enregistré dans les ressources de stockage de données 26.

En complément facultatif, la partition logicielle de gestion 48 est configurée pour déterminer au moins un paramètre d'exécution représentatif de la qualité d'exécution de la fonction non-critique de l'au moins une partition logicielle non-critique 46 et/ou de la fonction critique de l'au moins une partition logicielle critique 44, l'au moins un paramètre d'exécution étant également un critère de priorité.

Par exemple, à la fin de la durée prédéfinie, la partition logicielle de gestion 48 reçoit une pluralité d'informations de l'au moins une partition logicielle non-critique 46 et/ou de l'au moins une partition logicielle critique 44 et détermine le temps d'exécution, la fiabilité et/ou la disponibilité associé(es) à l'exécution de l'au moins une partition logicielle critique 44 et/ou de l'au moins une partition logicielle non-critique 46, afin d'en déduire l'au moins un paramètre d'exécution.

En variante, l'hyperviseur 34 est configuré pour générer au moins deux partitions logicielles critique 44 ou non-critiques 46.

Selon cette variante, la partition logicielle de gestion 48 est alors avantageusement configurée pour autoriser des échanges de données entre les au moins deux partitions logicielles critique 44 ou non-critiques 46 selon au moins un critère d'échange.

Typiquement, l'au moins un critère d'échange est un critère de disponibilité, un critère d'intégrité et/ou un critère de confidentialité entre les au moins deux partitions logicielles non-critiques 46.

Par exemple, l'opérateur définit préalablement l'au moins un critère d'échange.

La partition logicielle de gestion 48 est certifiée DAL A selon la norme DO-178.

Une telle certification de la partition logicielle de gestion 48 permet de garantir le fonctionnement du dispositif avionique 4 pour des partitions logicielles critiques 44, typiquement certifiées DAL A à DAL C, et des partitions logicielles non-critiques 46, typiquement certifiées DAL D à DAL E, sans que le comportement de ladite partition logicielle de gestion 48 n'influe sur les partitions logicielles critiques 44, et en particulier sur les fonctions critiques.

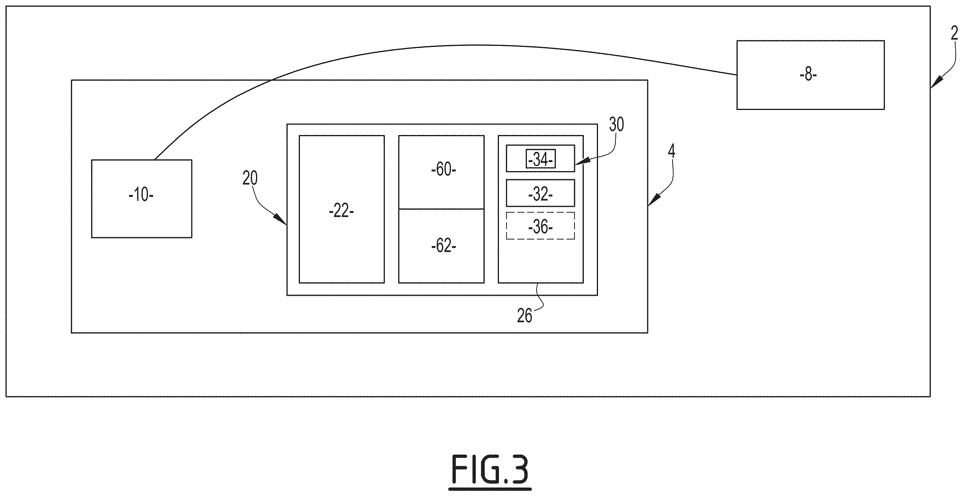

En variante représentée sur la figure 3, les ressources de calcul 22 comportent des ressources de calcul critiques 60 et des ressources de calcul non-critiques 62 préalablement fixées.

L'au moins une partition logicielle critique 44 et la partition logicielle de gestion 48 sont associées aux ressources de calcul critiques 60.

De plus, l'au moins une partition logicielle non-critique 46 est associée aux ressources de calcul non-critiques 62.

Une telle variante permet de garantir une disponibilité physique des ressources matérielles 20 pour l'au moins une partition logicielle critique 44 et pour la partition logicielle de gestion 48.

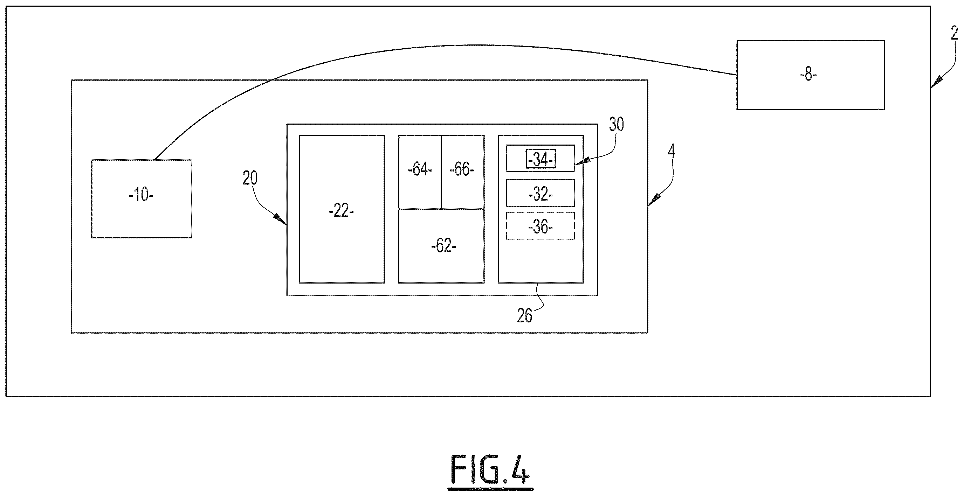

Dans un autre exemple représenté sur la figure 4, les ressources de calcul critiques 60 comportent des ressources de calcul de gestion 64 et des ressources de calcul avioniques 66 préalablement fixées.

La partition logicielle de gestion 48 est associée aux ressources de calcul de gestion 64.

L'au moins une partition logicielle critique 44 est associée aux ressources de calcul avioniques 66.

Une telle caractéristique permet alors de garantir une disponibilité physique des ressources matérielles 20 à la fois pour l'au moins une partition logicielle critique 44 et pour la partition logicielle de gestion 48.

En complément facultatif, le dispositif avionique 4 comporte une passerelle de communication 50 entre l'au moins une partition logicielle critique 44 et l'au moins une partition logicielle non-critique 46.

Par exemple, la passerelle de communication 50 est configurée pour autoriser un échange de données entre l'au moins une partition logicielle critique 44 et l'au moins une partition logicielle non-critique 46 selon l'au moins un critère d'échange.

Dans un tel exemple, la passerelle de communication 50 est configurée pour vérifier l'intégrité et/ou la confidentialité dudit échange de données, en particulier depuis une partition logicielle non-critique 46 vers une partition logicielle critique 44, et interrompre l'échange de données si l'intégrité et/ou la confidentialité associée n'est pas vérifiée.

La vérification de l'intégrité d'un échange de données depuis une partition logicielle critique 44 vers une partition logicielle non-critique 46 est facultative et optionnelle.

Par exemple, la passerelle de communication 50 est incluse dans l'hyperviseur 34.

En variante, la passerelle de communication 50 est externe au dispositif avionique 4 et ledit dispositif avionique 4 est configuré pour communiquer avec ladite passerelle de communication 50.

Dans une autre variante, la passerelle de communication 50 est incluse dans une partition logicielle critique 44 ou dans une partition logicielle non-critique 46.

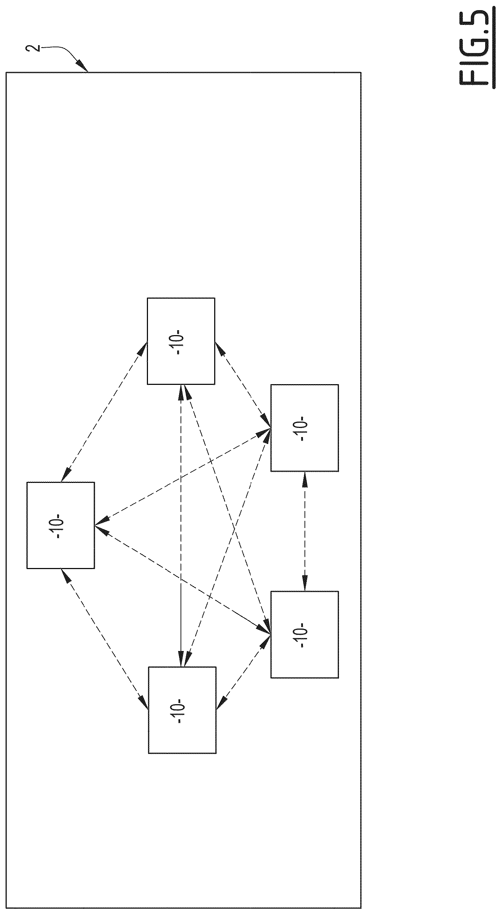

Sur la figure 5, l'aéronef 2 comportent une pluralité de dispositifs avioniques 4.

De plus, au moins un des dispositifs avioniques 4 est adapté pour stocker un hyperviseur 34 configuré pour générer et exécuter une partition logicielle de gestion 48 telle que définie précédemment.

Une telle configuration permet d'introduire un système de nœuds maître(s)/esclave(s) dans lequel le(s) dispositif(s) avionique 4 configuré(s) pour générer et exécuter la partition logicielle de gestion 48 sont catégorisé(s) comme maître(s).

Ainsi, le(s) dispositif(s) avionique 4 maître(s) introduisent les caractéristiques de la partition de gestion à l'ensemble des dispositifs avionique 4 via des échanges de données.

En complément facultatif, le(s) dispositif(s) avionique 4 esclave(s) sont catégorisé(s) en fonction d'un niveau de certification associé à l'au moins une partition logicielle critique 44 et à l'au moins une partition logicielle non-critique 46.

Une telle catégorisation permet au(x) dispositif(s) avionique(s) 4 maître(s) de transmettre des données au(x) dispositif(s) avionique 4 esclave(s) en fonction de ladite catégorisation.

Ainsi, le(s) dispositif(s) avionique 4 maître(s) peuvent transmettre des fonctions non-critiques et les stocker dans le(s) dispositif(s) avionique 4 esclave(s).

En réponse, le(s) dispositif(s) avionique 4 esclave(s) transmettent les résultats des fonctions-critiques associée(s) au(x) dispositif(s) avionique 4 maître(s).

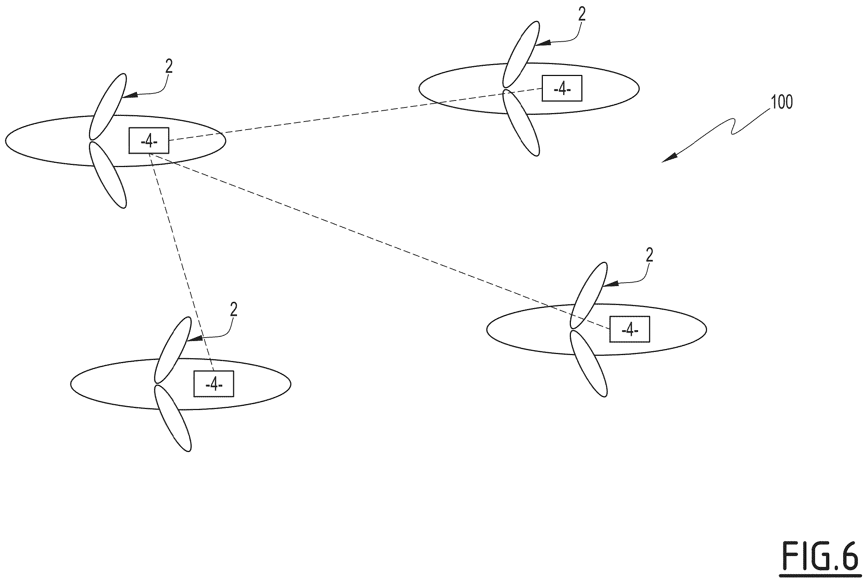

La figure 6 représente une flotte d'aéronefs 100 configurés pour échanger des données de traitement ou un service logiciel.

De plus, au moins un aéronef 2 de ladite flotte 100 comporte le dispositif avionique 4.

Une telle configuration forme alors un système de nœuds maître(s)/esclave(s) dans lequel le(s) aéronef(s) 2 comportant le dispositif avionique 4 sont catégorisés comme maître.

Ainsi, le(s) aéronef(s) 2 maître(s) implémente(nt) les caractéristiques du dispositif avionique 4 à l'ensemble des aéronefs 2 via des échanges de données.

En complément facultatif, le(s) aéronef(s) 2 esclave(s) sont catégorisé(s) en fonction d'un niveau de certification associé à l'au moins une partition logicielle critique 44 et à l'au moins une partition logicielle non-critique 46.

Une telle catégorisation permet au(x) aéronef(s) 2 maître(s) de transmettre des données au(x) aéronef(s) 2 esclave(s) en fonction de ladite catégorisation.

Ainsi, le(s) aéronef(s) 2 maître(s) peuvent transmettre des fonctions non-critiques et les stocker dans le(s) aéronef(s) 2 esclave(s).

En réponse, le(s) aéronef(s) 2 esclave(s) transmettent les résultats des fonctions-critiques associée(s) au(x) aéronef(s) 2 maître(s).

De préférence, tous les aéronefs 2 de ladite flotte 100 comportent ledit dispositif avionique 4.

Une telle configuration permet d'introduire de la résilience dans l'exécution des fonctions logicielle à l'échelle de plusieurs aéronefs 2.

En effet, en cas d'indisponibilité d'un dispositif avionique 4 d'un aéronef 2, un autre aéronef 2 de la flotte d'aéronefs 100 pourrait exécuter les fonctions nécessaires.

## Revendications

1. Dispositif électronique avionique (4) destiné à être embarqué à bord d'un aéronef (2), ledit dispositif avionique (4) comprenant au moins :
- une unité de communication (10) configurée pour échanger des données avec un équipement électronique (8),
- des ressources matérielles (20) comprenant :
∘ des ressources de calcul (22),
∘ des ressources réseau (24),
∘ des ressources de stockage de données (26) comprenant au moins un premier espace mémoire (30) dans lequel est stocké un hyperviseur (34), ledit hyperviseur (34) étant configuré pour :
- générer au moins une partition logicielle critique (44), chaque partition logicielle critique (44) étant configurée pour exécuter une fonction logicielle critique en utilisant au moins une partie des ressources matérielles (20) associée, une fonction logicielle critique étant une fonction dont le dysfonctionnement présente un risque pour la sûreté et/ou pour la sécurité de l'aéronef (2),
- générer au moins une partition logicielle non-critique (46), chaque partition logicielle non-critique (46) étant configurée pour exécuter une fonction logicielle non-critique en utilisant au moins une partie des ressources matérielles (20) associée,
- exécuter, sur une durée prédéfinie, l'au moins une partition logicielle critique (44) et l'au moins une partition logicielle non-critique (46) en allouant à chacune des partitions l'au moins une partie des ressources matérielles (20) associées et selon un ordonnancement temporel prédéterminé,
**caractérisé en ce que** l'hyperviseur (34) est en outre configuré pour générer et exécuter une partition logicielle de gestion (48) utilisant au moins une partie des ressources matérielles (20) associée, ladite partition logicielle de gestion (48) étant configurée pour :
- recevoir, depuis l'équipement électronique, au moins une fonction critique ou non-critique,
- stocker l'au moins une fonction critique ou non-critique dans un deuxième espace mémoire (32) des ressources de stockage de données (26), le deuxième espace mémoire (32) étant distinct du premier espace mémoire (30),
- remplacer la fonction non-critique de l'au moins une partition logicielle non-critique (46) par une fonction non-critique stockée dans la deuxième zone mémoire (32),
- remplacer la fonction critique de l'au moins une partition logicielle critique (44) par une fonction critique stockée dans la deuxième zone mémoire (32), et
- ordonner à l'hyperviseur (34) d'exécuter, sur la durée prédéfinie, l'au moins une partition logicielle critique (44) et l'au moins une partition logicielle non-critique (46).

2. Dispositif avionique selon la revendication 1, dans lequel la partition logicielle de gestion (48) est en outre configurée pour supprimer l'au moins une partition logicielle non-critique (46) et/ou l'au moins une partition logicielle critique (44) associée(s) à la fonction non-critique et/ou à la fonction critique qui a été remplacée.

3. Dispositif avionique selon la revendication 1 ou 2, dans lequel la partition logicielle de gestion (48) est en outre configurée pour modifier l'ordonnancement temporel en fonction d'au moins un critère de priorité associé à l'au moins une partition logicielle critique (44) et/ou à l'au moins une partition non-critique (46).

4. Dispositif avionique selon l'une quelconque des revendications précédentes, dans lequel l'au moins un critère de priorité est un critère de temps d'exécution, de priorité fixable par un opérateur ou de possibilité d'exécution en plusieurs cycles d'exécution.

5. Dispositif avionique selon la revendication précédente, dans lequel la partition logicielle de gestion (48) est en outre configurée pour déterminer au moins un paramètre d'exécution représentatif d'une qualité d'exécution de la fonction non-critique de l'au moins une partition logicielle non-critique (46) et/ou de la fonction critique de l'au moins une partition logicielle critique (44), l'au moins un paramètre d'exécution étant également un critère de priorité.

6. Dispositif avionique selon l'une quelconque des revendications précédentes, dans lequel l'hyperviseur (34) est configuré pour générer au moins deux partitions logicielles critiques (44) ou non-critiques (46).

7. Dispositif avionique selon la revendication précédente, dans lequel la partition logicielle de gestion (48) est en outre configurée pour autoriser des échanges de données entre les au moins deux partitions logicielles critiques (44) ou non-critiques (46) selon au moins un critère d'échange.

8. Dispositif avionique selon la revendication précédente, dans lequel l'au moins un critère d'échange est un critère de disponibilité, un critère d'intégrité et/ou un critère de confidentialité entre les au moins deux partitions logicielles non-critiques (46).

9. Dispositif avionique selon l'une quelconque des revendications précédentes, dans lequel l'ordonnancement temporel est adapté pour garantir l'exécution de l'au moins une partition logicielle critique (44) et de l'au moins une partition logicielle de gestion (48) sur la durée prédéfinie.

10. Dispositif avionique selon l'une quelconque des revendications précédentes, dans lequel les ressources de calcul (22) comportent en outre des ressources de calcul critiques (60) et des ressources de calcul non-critiques (62) préalablement fixées, l'au moins une partition logicielle critique (44) et la partition logicielle de gestion (48) étant associées aux ressources de calcul critiques (60), l'au moins une partition logicielle non-critique (46) étant associée aux ressources de calcul non-critiques (62).

11. Dispositif avionique selon la revendication précédente, dans lequel les ressources de calcul critiques (60) comportent en outre des ressources de calcul de gestion (64) et des ressources de calcul avioniques (66) préalablement fixées, la partition logicielle de gestion (48) étant associée aux ressources de calcul de gestion (64) et l'au moins une partition logicielle critique (44) étant associée aux ressources de calcul avioniques (66).

12. Dispositif avionique selon l'une quelconque des revendications précédentes comportant en outre une passerelle de communication (50) entre l'au moins une partition logicielle critique (44) et l'au moins une partition logicielle non-critique (46), ladite passerelle de communication (50) étant configurée pour :
- autoriser un échange de données entre l'au moins une partition logicielle critique (44) et l'au moins une partition logicielle non-critique (46) selon l'au moins un critère d'échange,
- vérifier l'intégrité et/ou la confidentialité dudit échange de données, et
- interrompre l'échange de données si l'intégrité et/ou la confidentialité associée n'est pas vérifiée ;
la passerelle de communication (50) étant de préférence incluse dans l'hyperviseur (34) ou externe au dispositif avionique (4).

13. Dispositif avionique selon l'une quelconque des revendications précédentes, dans lequel la fonction non-critique destinée à être exécutée par l'au moins une partition logicielle non-critique (46) est incluse dans un conteneur comportant au moins une fonction annexe, la fonction non-critique nécessitant l'au moins une fonction annexe pour être exécutée.

14. Aéronef (2) comprenant un dispositif avionique (4), **caractérisé en ce que** ledit dispositif avionique (4) est selon l'une quelconque des revendications précédentes.

15. Flotte d'aéronefs (100) configurés pour échanger des données de traitement ou un service logiciel, au moins un aéronef (2) de ladite flotte (100) comportant un dispositif avionique (4) selon l'une quelconque des revendications précédentes ;
tous les aéronefs (2) de ladite flotte (100) comportant de préférence ledit dispositif avionique (4)
